# EUROPÄISCHE PATENTANMELDUNG

(11) **EP 4 120 385 A1**
(43) Veröffentlichungstag der Anmeldung: **18.01.2023**
(21) Anmeldenummer: 22182528.4
(22) Anmeldetag: 01.07.2022
(51) Int. Cl.: H01M 4/04, H01M 10/04

(54) **VERFAHREN UND VORRICHTUNG ZUR HERSTELLUNG EINER ELEKTRODE EINER BATTERIEZELLE**

(30) Priorität: 06.07.2021 DE 102021117378
(71) Anmelder: VOLKSWAGEN AG, 38440 Wolfsburg (DE)
(72) Erfinder: Jamadar, Kartik, 38442 Wolfsburg (DE)
(74) Vertreter: karo IP

(57) **Zusammenfassung**

Verfahren zur Herstellung einer Elektrode (1) einer Batteriezelle (2); wobei das Verfahren zumindest die folgenden Schritte aufweist:
a) Bereitstellen einer Elektrode (1), die ein zumindest teilweise mit einem Aktivmaterial (3) beschichtetes Trägermaterial (4) umfasst;
b) Fördern der Elektrode (1) entlang einer Förderrichtung (5) und Verdichten des Aktivmaterials (3) durch mindestens einen Kalander (6);
wobei die Elektrode (1) an einem parallel zur Förderrichtung (5) verlaufenden Rand (7) einen unbeschichteten ersten Bereich (8) aufweist; wobei zumindest eine Walze (9) des Kalanders (6) über eine Schwingungseinrichtung (10) zu Schwingungen (11) angeregt wird.

Vorrichtung (17) zur Herstellung einer Elektrode (1) einer Batteriezelle (2), wobei die Elektrode (1) ein zumindest teilweise mit einem Aktivmaterial (3) beschichtetes Trägermaterials (4) umfasst und die Vorrichtung (17) zur Verdichtung des Aktivmaterials (3) geeignet ausgeführt ist.

## Beschreibung

Die Erfindung betrifft ein Verfahren und eine Vorrichtung zur Herstellung einer Elektrode einer Batteriezelle. Die Elektrode umfasst ein zumindest teilweise mit einem Aktivmaterial beschichtetes Trägermaterial. Insbesondere wird mit dem Verfahren bzw. der Vorrichtung das Aktivmaterial, das auf dem Trägermaterial angeordnet ist, kalandriert, also verdichtet. Das Trägermaterial umfasst insbesondere ein bandförmiges Trägermaterial.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separator-Blättern aufweist. Zumindest ein Teil der Anoden- und Kathodenblätter sind als Stromableiter ausgeführt, zur Ableitung des von der Zelle bereitgestellten Stroms hin zu einem außerhalb der Zelle angeordneten Verbraucher.

Bei der Herstellung einer Lithium-Ionen-Batteriezelle wird ein sogenanntes Trägermaterial, insbesondere ein bandförmiges Trägermaterial, z. B. eine Trägerfolie, einseitig oder beidseitig zumindest teilweise mit einem Aktivmaterial beschichtet. Die an der Elektrode ausgebildeten Stromableiter (Ableiterfähnchen) werden insbesondere durch unbeschichtete Bereiche des Trägermaterials gebildet. Das Trägermaterial umfasst z. B. Kupfer, eine Kupferlegierung, Aluminium oder eine Aluminiumlegierung. Der unbeschichtete Bereich der Elektrode wird im Folgenden als erster Bereich und der beschichtete Bereich als zweiter Bereich bezeichnet.

Die so erzeugte Beschichtung aus Aktivmaterial ist porös. Die Porosität wird durch das Kalandrieren reduziert, da hier die Beschichtung verdichtet wird. Die Verdichtung ist erforderlich, um eine spezifische Kapazität (auf das Volumen bezogen) und eine elektrische Leitfähigkeit zu erhöhen.

Das Aktivmaterial wird beim Kalandrieren um mindestens 20 %, insbesondere um mindestens 25 %, komprimiert. Der Kalandriervorgang ist dem Walzvorgang ähnlich. Das Aktivmaterial wird in einer Verformungszone mit einer Kalandrierkraft beaufschlagt komprimiert. Ein Kalander umfasst mehrere Walzen, die zumindest einen Spalt bilden, durch den hindurch die Elektrode entlang einer Förderrichtung gefördert wird. Dabei wird der beschichtete zweite Bereich der Elektrode durch die Walzen kontaktiert und verdichtet. Der unbeschichtete Bereich der Elektrode wird nicht kontaktiert.

Beim Kalandrieren sind zumindest die folgenden Probleme zu beachten:
Erstens, da die Verformung bzw. Verdichtung des Aktivmaterials beim Kalandrieren in einem sehr kleinen Bereich stattfindet (abhängig vom Durchmesser der Walze), gibt es eine sehr hohe Spannungskonzentration in einem kleinen Verformungsbereich. Diese Spannungskonzentration verursacht Risse im Aktivmaterial. Dabei ist zu beachten, dass eine hohe Kompression beim Kalandrieren wünschenswert ist. Diese aber ist mit Problemen wie Partikelbruch an der Elektrodenoberfläche verbunden.

Zweitens, während des Kalandrierens wird das unbeschichtete Trägermaterial, im ersten Bereich, nicht in Förderrichtung gedehnt. Außerdem erfährt das unbeschichtete Trägermaterial Druckspannungen in einer quer zur Förderrichtung und parallel zur beschichteten Oberfläche des Trägermaterials verlaufenden Querrichtung. Diese beiden Effekte führen zu einer Faltenbildung im unbeschichteten Bereich des Trägermaterials (erster Bereich).

Der beschichtete Bereich des Trägermaterials (zweiter Bereich) wird in der Querrichtung gedehnt. Dadurch entstehen elastische Querzugspannungen im Trägermaterial. Diese elastische Energie wird nach dem Kalandrieren freigesetzt und führt zu einer Welligkeit des Trägermaterials im beschichteten Bereich.

Der Spannungszustand während des Kalandrierens erzeugt also Falten im unbeschichteten Bereich des Trägermaterials und eine Welligkeit im beschichteten Bereich des Trägermaterials. Der Grund für diese beiden Phänomene kann durch den Spannungs- und Dehnungszustand erklärt werden.

Eine erste Spannung F1 (Zugspannung) in der Elektrode ist parallel zur Förderrichtung orientiert und wird durch eine Fördereinrichtung eingestellt.

Eine zweite Spannung F2 (Druckspannung) ist in einer quer zur Förderrichtung gerichteten radialen Richtung (senkrecht zum Trägermaterial und zur Beschichtung) orientiert und wird durch die Anpresskraft der Walzen erzeugt.

Eine dritte Spannung F3 (Zugspannung) ist in der Querrichtung orientiert und resultiert aus der Dehnung der Beschichtung. Sie wird nur auf das Trägermaterial im beschichteten zweiten Bereich ausgeübt.

Eine vierte Spannung F4 (Zugspannung) ist in der Förderrichtung orientiert und resultiert aus der Dehnung der Beschichtung in der Förderrichtung. Sie wird nur auf das Trägermaterial im beschichteten zweiten Bereich ausgeübt.

Eine fünfte Spannung F5 (Druckspannung) ist in Querrichtung orientiert und wirkt nur auf das Trägermaterial im unbeschichteten ersten Bereich.

Das Fehlen der vierten Spannung F4 (Zugspannung in Förderrichtung) im unbeschichteten ersten Bereich führt zu der Faltenbildung. Die fünfte Druckspannung im ersten Bereich führt ebenfalls zu der Faltenbildung. Die dritte Spannung F3 dehnt das Trägermaterial im zweiten Bereich in der Querrichtung. Nach dem Kalandrieren werden elastische Spannungen abgebaut. Dies führt zu einer Welligkeit der Beschichtung.

Die Faltenbildung ist bei einer als Kathode ausgeführten Elektrode regelmäßig größer als bei einer Anode. Bei einer als Kathode ausgeführten Elektrode ist die zweite Spannung F2 regelmäßig größer. Daraus resultiert eine höhere vierte Spannung F4. Dabei hat Aluminium bzw. eine Aluminiumlegierung als Trägermaterial für die Kathode auch eine geringe Steifigkeit gegen Faltenbildung als z. B. Kupfer bzw. eine Kupferlegierung als Trägermaterial für die Anode.

Die fünfte Spannung F5 verursacht ebenfalls Falten. Die kombinierte Wirkung der vierten Spannung F4 und der fünften Spannung F5 bewirkt, dass in einem Winkel zur Förderrichtung verlaufende Falten auftreten, insbesondere im ersten Bereich.

Die durch die dritte Spannung F3 hervorgerufene Rückfederung verursacht eine Welligkeit der Beschichtung.

Drittens, wenn die Reibung hoch ist, klebt das Aktivmaterial an der Walze des Kalanders, was wiederrum zu einer immer stärkeren Anhaftung des Aktivmaterials an den Kalanderwalzen führt. Dies führt zu Delaminationen im Aktivmaterial und zu einer Grübchenbildung (pitting) auf der Walzenoberfläche.

Da die Verformung beim Kalandrieren in einem sehr kleinen Bereich stattfindet (abhängig vom Durchmesser der Walze), gibt es eine sehr hohe Spannungskonzentration in einem kleinen Verformungsbereich. Diese Spannungskonzentration verursacht verschiedene Defekte, wie Delamination auf der Elektrodenoberfläche und Grübchenbildung auf der Kalanderwalze.

Viertens, da die Verformung beim Kalandrieren in einem sehr kleinen Bereich stattfindet (abhängig vom Durchmesser der Walze), gibt es eine sehr hohe redundante Spannung. Das Aktivmaterial muss in der kleinen Verformungszone seine Richtung ändern. Dies führt zu einer hohen Verformungskraft. Die redundante Kraft wird einen großen Teil der Kraft ausmachen. Um die redundante Kraft zu reduzieren, muss die Verformungszone vergrößert werden, d.h. es wird ein großer Walzendurchmesser zum Kalandrieren benötigt.

Die gesamte Kalandrierkraft setzt sich zusammen aus Druckkraft, Reibungskraft und redundanter Kraft. Für die Kathode ist die Kraft viel höher, was eine Kalandriermaschine mit hoher Tonnage erfordert. Redundante Kraft und Druckkraft können nicht wesentlich reduziert werden, ohne in Kalanderwalzen mit großem Durchmesser und Heizung zu investieren. Wenn die Reibungskraft reduziert wird, kann man den Gesamtkraftbedarf drastisch reduzieren.

Fünftens, beim Kalandrieren der Elektrode (insbesondere der Anode) klebt Aktivmaterial an den Walzen. Dies erhöht die Kalandrierkraft und auch die geforderte Dickentoleranz der Beschichtung bzw. der Elektrode ist schwer zu erreichen. Eine Inline-Reinigung der Kalanderwalzen ist schwierig, da die Bürste oder die Walze, die das Reinigungsmedium aufträgt, Fasern verlieren kann, die sich wiederum auf der Elektrodenoberfläche ablagern. Außerdem kann die organische Reinigungslösung das Bindemittel in dem Aktivmaterial auflösen.

Zur Lösung der genannten fünf Probleme werden bisher folgende Abhilfemaßnahmen durchgeführt: z. B. wird die Reinigung hauptsächlich manuell zu Beginn eines Kalandrierprozesses durchgeführt. Dabei ist dem Kalandrieren genügend Zeit zum Trocknen einzuräumen, so dass kein Reinigungsmedium auf den Walzen vorhanden ist. Da die Gefahr besteht, dass das Reinigungsmedium in die Elektrode eindringt, wird die Inline-Reinigung nicht während des Kalandrierprozesses durchgeführt. Daher ist es schwierig, sehr kleine Dickentoleranzen zu erreichen.

Um das Problem der Faltenbildung zu lösen, wird der Abfallbereich des Trägermaterials vor dem Kalandrieren abgeschnitten. Bei intermittierend aufgetragener Beschichtung (also keine, entlang der Förderrichtung durchgehende Beschichtung) ist dies eine praktikable Option. Für eine entlang der Förderrichtung kontinuierliche Beschichtung mit seitlichen unbeschichteten Bereichen der Elektrode ist diese Lösung nicht durchführbar. Es wird daher die erste Spannung F1 weiter erhöht. Diese Maßnahme kann das Fehlen der vierten Spannung F4 im unbeschichteten ersten Bereich aber nur teilweise kompensieren.

Diese bekannten Lösungen weisen die folgenden Nachteile auf:
- die zur Reduzierung von Falten erhöhte erste Spannung kann zu Rissen oder zum Aufbrechen des Trägermaterials führen;
- bei der intermittierenden Beschichtung muss das Schneiden zweimal durchgeführt werden; zuerst, um den Ausschussbereich zu entfernen, und dann, um das Endlosmaterial in ein Endlosmaterial mit geringerer Breite zu schneiden; damit werden die Kosten und die Zykluszeit zur Herstellung der Batteriezelle erhöht;
- die manuelle Reinigung kann die Anhaftung von Aktivmaterial (insbesondere Graphit) auf der Walzenoberfläche nicht verhindern; die Rauheit der Kalanderwalze wird zunehmen, was die Reibung erhöht; außerdem wird die Dickengenauigkeit der Elektrode verringert und die Kalandrierlast erhöht.

Zusätzlich zu den vorgenannten Abhilfemaßnahmen sind folgende weitere Abhilfemaßnahmen bekannt:
- Faltenentfernung beim Kalandrieren der Kathode durch Erwärmung des Substrats im ersten Bereich und anschließende Streckung dieses erwärmten Bereichs, um eine plastische Zugverformung zu erzwingen;
- die Inline-Reinigung der Kalanderwalze erfolgt mit einem Reinigungsmedium, das schnell verdunstet; eine beheizte Walze erhöht auch die Verdunstung des Reinigungsmediums;
- auf die Nassreinigung der Walze erfolgt eine Trockenreinigung; auf diese Weise wird das gesamte Reinigungsmedium von den Kalanderwalzen entfernt; dies macht die Reinigungsmethode komplex;
- Kalanderwalzen mit einem größeren Durchmesser von ca. 900 mm werden verwendet, um die Verformungszone des Kalanders zu vergrößern.

Aus der DE 10 2007 041 932 A1 sind eine Kalandriervorrichtung und ein Verfahren zum Kalandrieren einer Materialbahn bekannt.

Aus der DE 10 2017 219 453 sind ein Verfahren und eine Vorrichtung zur Herstellung eines Funktionselements für eine Elektrodeneinheit einer Batteriezelle bekannt. Die Vorrichtung umfasst einen Kalander mit zwei Walzen, wobei mindestens eine der Walzen über einen Ultraschallwellengenerator angeregt wird.

Aus der CN 103943823 A ist eine Ultraschall-angeregte Kalandriervorrichtung zur Herstellung von Elektroden bekannt.

Aufgabe der vorliegenden Erfindung ist es, die mit Bezug auf den Stand der Technik angeführten Probleme zumindest teilweise zu lösen. Insbesondere sollen ein Verfahren und eine Vorrichtung vorgeschlagen werden, durch die eine Elektrode mit teilweise unbeschichteten Bereichen ohne Welligkeit und Faltenbildung kalandrierbar ist.

Zur Lösung dieser Aufgaben trägt ein Verfahren mit den Merkmalen gemäß Patentanspruch 1 und eine Vorrichtung mit den Merkmalen gemäß Patentanspruch 7 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Herstellung einer Elektrode einer Batteriezelle vorgeschlagen. Das Verfahren weist zumindest die folgenden Schritte auf:
a) Bereitstellen einer Elektrode, die ein zumindest teilweise mit einem Aktivmaterial beschichtetes Trägermaterial umfasst;
b) Fördern der Elektrode entlang einer Förderrichtung und Verdichten des Aktivmaterials durch mindestens einen Kalander.
Die Elektrode weist an einem parallel zur Förderrichtung verlaufenden Rand einen unbeschichteten ersten Bereich auf. Zumindest eine Walze des Kalanders wird über eine Schwingungseinrichtung zu Schwingungen angeregt.

Die obige (nicht abschließende) Einteilung der Verfahrensschritte in a) und b) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Bevorzugt werden die Schritte a) und b) in der angegebenen Reihenfolge durchgeführt.

Die herzustellende Elektrode ist insbesondere für den Einsatz in einer Lithium-Ionen-Batteriezelle vorgesehen. Die Elektrode umfasst insbesondere ein Trägermaterial, z. B. eine Kupfer- oder Aluminiumfolie. Das verwendete Trägermaterial besteht insbesondere aus 10 bis 12 um dickem Kupfer für die Anode und 12 bis 15 µm dickem Aluminium für die Kathode. Das Trägermaterial ist zumindest auf einer größten Seitenfläche, ggf. auch auf den einander gegenüberliegenden größten Seitenflächen zumindest teilweise mit einem Aktivmaterial beschichtet. Das Trägermaterial ist als Endlosmaterial ausgeführt und die Seitenflächen werden durch Ränder begrenzt.

Das Trägermaterial der Elektrode wird dem Kalander insbesondere als Endlosmaterial zugeführt. Dabei ist ein mit dem Aktivmaterial beschichteter zweiter Bereich der Elektrode kontinuierlich, also entlang der Förderrichtung ohne Unterbrechungen, ausgeführt. Benachbart zum zweiten Bereich ist zumindest ein unbeschichteter erster Bereich vorgesehen, der insbesondere kontinuierlich, also entlang der Förderrichtung ohne Unterbrechungen, ausgeführt ist. Der erste Bereich erstreckt sich insbesondere bis hin zum Rand. Insbesondere erstreckt sich auf jeder Seite des einen zweiten Bereichs ein erster Bereich hin zum Rand. Insbesondere ist die Elektrode auf beiden Seitenflächen identisch ausgeführt bzw. beschichtet.

Gemäß Schritt a) erfolgt insbesondere ein Bereitstellen einer Elektrode, die ein zumindest teilweise mit einem Aktivmaterial beschichtetes Trägermaterial umfasst. Die Elektrode wird insbesondere als bandförmiges Endlosmaterial bereitgestellt. Insbesondere ist das Aktivmaterial auf dem Trägermaterial aufgebracht und ggf. geglättet bzw. hinsichtlich einer Dicke der Beschichtung eingestellt, jedoch noch nicht kalandriert worden. Die Beschichtung aus Aktivmaterial ist insbesondere porös. Die Porosität wird durch das folgende Kalandrieren reduziert, da hier die Beschichtung verdichtet wird. Die Verdichtung ist erforderlich, um eine spezifische Kapazität (auf das Volumen bezogen) und eine elektrische Leitfähigkeit zu erhöhen.

Gemäß Schritt b) erfolgt insbesondere ein Fördern der Elektrode entlang einer Förderrichtung und ein Verdichten des Aktivmaterials durch mindestens einen Kalander. Das bandförmige Endlosmaterial wird insbesondere entlang einer Förderrichtung gefördert.

Bei einem Kalandrieren wird das beschichtete Trägermaterial durch eine Walzenanordnung, den Kalander, geführt bzw. gefördert. Die Walzen sind ggf. temperiert und können damit die Beschichtung erwärmen. Über die Walzen wird die Beschichtung verdichtet. Es erfolgt üblicherweise eine Erhöhung einer Dichte (eine Verringerung der Porosität) der Beschichtung von mindestens 20 %.

Das Aktivmaterial wird beim Kalandrieren um mindestens 20 %, insbesondere um mindestens 25 %, komprimiert. Der Kalandriervorgang ist dem Walzvorgang ähnlich. Das Aktivmaterial wird in einer Verformungszone mit einer Kalandrierkraft beaufschlagt komprimiert. Ein Kalander umfasst mehrere Walzen, die zumindest einen Spalt bilden, durch den hindurch die Elektrode entlang einer Förderrichtung gefördert wird.

Der beschichtete zweite Bereich der Elektrode wird durch die Walzen des Kalanders kontaktiert und verdichtet. Der unbeschichtete Bereich der Elektrode, der erste Bereich, wird nicht kontaktiert.

Insbesondere umfasst der Kalander mehrere Walzen, wobei mindestens zwei der Walzen über jeweils mindestens eine Schwingungseinrichtung angeregt werden.

Insbesondere regt die mindestens eine Schwingungseinrichtung die mindestens eine Walze mit einer Frequenz zwischen 5 kHz [Kilohertz] und 30 kHz, insbesondere zwischen 15 kHz und 25 kHz an.

Insbesondere regt die mindestens eine Schwingungseinrichtung die mindestens eine Walze mit einer Amplitude von zwischen 5 µm [Mikrometer] und 30 µm an.

Insbesondere liegt ein Schwingungsknoten (ein sogenannter "node") der Schwingungen auf einer Drehachse der Walze, so dass eine Schwingungsamplitude der Schwingungen im Bereich der Drehachse minimal ist. Insbesondere ist eine Schwingungsamplitude in einem Kontaktbereich zwischen Walze und Aktivmaterial der Elektrode maximal. In diesem Kontaktbereich ist also insbesondere der Schwingungsbauch (ein sogenannter "antinode") der Schwingungen angeordnet.

Insbesondere umfasst die Schwingungseinrichtung eine Rolle, die über eine Umfangsfläche die mindestens eine Walze kontaktiert und zu Schwingungen anregt. Insbesondere weist die Rolle eine Welle mit einem ersten Ende und einem zweiten Ende auf, wobei zwischen den Enden die Umfangsfläche angeordnet ist. Insbesondere wird die Rolle über jedes Ende zu Schwingungen angeregt.

Insbesondere erfolgt nach Schritt b) in einem weiteren Schritt c) ein Schneiden des beschichteten Trägermaterials. Das Schneiden umfasst z. B. ein Vereinzeln des Endlosmaterials zu einzelnen Elektrodenblättern und/oder ein Ausklinken und/oder ein Aufteilen des Endlosmaterials zu mehreren Bandmaterialien geringerer Breite (sogenanntes Schlitzen).

Beim Ausklinken wird ein (unbeschichteter) Kollektorbereich bzw. Ableiter an dem Trägermaterial ausgebildet.

Das Schneiden erfolgt insbesondere durch mechanisches Schlitzen oder Stanzen, durch Laser-, Wasserstrahl- oder Ultraschallschneiden.

Insbesondere entsteht durch die Schwingungsanregung ein Stick- und Slip-Effekt zwischen einer Walzenoberfläche und der Elektrodenoberfläche, also dem Aktivmaterial. Dadurch wird die Reibung drastisch reduziert und somit die Faltenbildung verringert. Die Schwingungsanregung führt insbesondere zu einer guten Oberflächengüte.

Da die Reibung reduziert wird, verringert sich auch die eingangs beschriebene vierte Spannung F4, die das Trägermaterial und die Beschichtung dehnt. Dadurch wird die Faltenbildung auf dem Trägermaterial in dem unbeschichteten ersten Bereich reduziert.

Weniger Reibung bedeutet auch weniger Haftung der Beschichtung auf der Walzenoberfläche und auch eine geringere Gesamtkalanderkraft. Damit kann der Kalander über längere Zeitintervalle ohne Reinigung der Walzenoberfläche betrieben werden.

Die Vibration erzeugt zudem Mikrotexturen auf der Oberfläche des Aktivmaterials, was zu einer besseren Benetzung durch den Elektrolyten im später erfolgenden Betrieb der Batteriezelle führt.

Insbesondere erfolgt die Kalandrierung, also Schritt b), bei Raumtemperatur, erfordert also keine zusätzliche Beheizung des Kalanders bzw. der mindestens einen Walze.

Um eine hohe elektrische Leitfähigkeit und volumetrische Energiedichte zu erhalten, wird insbesondere eine Kompression bzw. Verdichtung des Aktivmaterial von mehr als 25 %, insbesondere von ca. 30 %, angewendet.

Die mindestens eine Walze des Kalanders wird insbesondere mit einer Schwingung angeregt, so dass die Reibung zwischen Walze und Elektrodenoberfläche weiter verringert werden kann.

Insbesondere werden die Schwingungen durch Rollen (bzw. Übergangswalzen) übertragen. Insbesondere wird die mindestens eine Rolle mit einem piezoelektrischen Wandler in Schwingung versetzt.

Die Rolle verhindert einen punktuellen Kontakt zwischen Schwingungseinichtung und Walzenoberfläche, so dass die Schwingungen gleichmäßig auf die Walzenoberfläche und gleichmäßig über die in der Querrichtung verlaufende Breite der Elektrode verteilt auf das Aktivmaterial übertragen werden.

Die Schwingungen haben insbesondere eine solche Wellenlänge, dass die Walzenoberfläche, die mit der Elektrode in Kontakt ist, einen Schwingungsbauch hat. Das bedeutet, dass die maximale Amplitude auf die Kalandrierzone übertragen wird. Dies erhöht den Slip-Stick-Effekt und reduziert somit die Reibung.

Die Lagerung der Walze hat insbesondere eine minimale Amplitude, da ein Schwingungsknoten der Schwingungen auf der Drehachse der Walze liegt.

Insbesondere ist vorgesehen, dass die Maschinenelemente des Kalanders über eine Schwingungsdämpfung verfügen, um die Übertragung von Schwingungen auf andere Maschinenelemente zu reduzieren.

Die Rolle weist insbesondere eine sich entlang der Querrichtung (parallel zur Drehachse der Walze) erstreckende Breite auf, die im Wesentlichen oder zumindest der Breite der Elektrode bzw. des zweiten Bereichs entspricht. Auf diese Weise führt die Walzenoberfläche, die mit der Elektrodenoberfläche in Kontakt ist, die Schwingungen auf. Der Rest der Walzenoberfläche führt die Schwingungen nicht oder nur reduziert aus. Hin zu den, seitlich der Elektrode angeordneten Lagerungen der Walze werden die Schwingungen zunehmend gedämpft.

Insbesondere kann durch das vorgeschlagene vibrationsunterstützte Kalandrieren zumindest einer der folgenden Vorteile erreicht werden, ggf. alle der genannten Vorteile:
- die Reibung zwischen Elektrode und Walzenoberfläche kann durch Slip- und Stick-Effekte verringert werden; dies kann die Kalandrierkraft reduzieren und auch die Faltenbildung verringern;
- die sonst entstehenden Falten können ohne Heizwalzen reduziert werden;
- vibrationsunterstützte Walzen können Elektroden mit Mikrotextur auf der Beschichtung erzeugen; dies kann die Benetzung des Elektrolyten verbessern, indem mehr Elektrolyt von dem Aktivmaterial aufgenommen wird;
- Vibration reduziert die Adhäsion der Beschichtung an der Walze; dies reduziert den Reinigungsbedarf der Elektrode bzw. der Walze;
- die Reibung beim Kalandrieren bzw. der Anteil der Reibungskraft an der Gesamtkraft kann reduziert werden; das bedeutet, dass mehr Energie für das Kalandrieren zur Verfügung steht, da die Energie zur Überwindung der Reibung reduziert wird;
- die Vibration erzeugt Mikrohämmern auf der Elektrodenoberfläche, was zur Erhöhung der Porosität der Elektrode beiträgt;
- eine hohe Oberflächengüte der Elektrode im Vergleich zum konventionellen Kalandrierverfahren ist erreichbar;
- eine Erwärmung der Elektrode zur Beseitigung von Falten ist nicht notwendig;
- es ist eine höhere Dichte des Aktivmaterials bzw. der Elektrode, ohne Delamination und Risse im Aktivmaterial möglich.

Es wird eine Vorrichtung zur Herstellung einer Elektrode einer Batteriezelle vorgeschlagen. Die Elektrode umfasst ein zumindest teilweise mit einem Aktivmaterial beschichtetes Trägermaterial. Die Vorrichtung ist zur Verdichtung des Aktivmaterials geeignet ausgeführt. Die Vorrichtung umfasst zumindest einen Kalander und eine Schwingungseinrichtung. Die Elektrode ist entlang einer Förderrichtung durch den mindestens einen Kalander förderbar. Die Elektrode weist an einem parallel zur Förderrichtung verlaufenden Rand einen unbeschichteten ersten Bereich auf; wobei zumindest eine Walze des Kalanders über die Schwingungseinrichtung zu Schwingungen anregbar ist.

Die Schwingungseinrichtung umfasst insbesondere eine Rolle, die über eine Umfangsfläche die mindestens eine Walze kontaktiert und zu Schwingungen anregt.

Die Walzenoberfläche führt infolge der Anregung insbesondere Schwingungen aus, durch die die Walzenoberfläche im Wesentlichen entlang der radialen Richtung hin zur Elektrode und weg von der Elektrode bewegt wird.

Die Schwingungseinrichtung umfasst bevorzugt einen Wandler (piezoelektrisch oder magnetostriktiv), auf den ein hochfrequentes elektrisches Signal übertragen wird. Der Wandler wandelt das elektrische Signal in niederfrequente mechanische Schwingungen mit geringer Amplitude um. Im Wesentlichen wandelt der Wandler also elektrische Energie in mechanische Schwingungen um. Diese mechanische Schwingung wird dann an die Walze bzw. über die Rolle(-n) an die Walze weitergegeben.

Insbesondere ist die Walze entlang einer, quer zu einer Förderrichtung der Elektrode durch den Kalander verlaufenden, radialen Richtung zwischen der Elektrode und der Rolle angeordnet.

Insbesondere weist die Rolle eine Welle mit einem ersten Ende und einem zweiten Ende auf. Zwischen den Enden ist die Umfangsfläche angeordnet. Die Rolle ist über jedes Ende zu Schwingungen anregbar. Damit sind über die Breite der Rolle bzw. die Breite der Elektrode gleichmäßige Schwingungen erzeugbar.

Insbesondere weist die Walze eine Drehachse auf und entlang einer Umfangsrichtung um die Drehachse sind eine Mehrzahl von Rollen angeordnet, die die Walze über die jeweilige Umfangsfläche kontaktieren.

Insbesondere sind zumindest zwei Rollen der Mehrzahl von Rollen über ein Übertragungselement gemeinsam anregbar. Das Übertragungselement kontaktiert die Umfangsflächen der mindestens zwei Rollen, wobei das Übertragungselement durch die Schwingungseinrichtung zu Schwingungen anregbar ist. Alternativ kann jede Rolle einzeln über eine Schwingungseinrichtung angeregt werden. Dabei können für jede Rolle voneinander unterschiedliche Parameter (Frequenz, Amplitude, etc.) verwendet werden.

Bei einer ersten Ausgestaltung der Vorrichtung bzw. des Verfahrens werden die Schwingungen insbesondere von einer vibrierenden Rolle bzw. Zwischenwalze auf die (Kalander-)Walze bzw. Walzen übertragen.

Die Schwingungseinrichtung umfasst insbesondere einen piezoelektrischen Wandler. Der piezoelektrische Wandler wandelt ein elektrisches Signal in eine mechanische Schwingung um.

Bei einer zweiten Ausgestaltung sind mehrere Rollen vorgesehen, die über ein (einteilig ausgeführtes) Übertragungselement gemeinsam angeregt werden. Das Übertragungselement wird, z. B. von einem piezoelektrischen Wandler, mit Schwingungen beaufschlagt. Insbesondere sind zwei oder drei Rollen vorgesehen, die sich frei drehen können. Diese Rollen übertragen die vom Übertragungselement auf die Rollen applizierte Vibration auf die (Kalander- )Walze bzw. Walzen. Auf diese Weise wird die Vibration über eine größere Fläche auf die (Kalander-)Walze übertragen. Das Spiel und der Druck zwischen den Rollen und der (Kalander-)Walzen kann insbesondere gezielt verändert werden. Dadurch kann die Vibration auf die Walze mehr auf der Ausgangsseite der Kalanderverformungszone, als auf der Eingangsseite der Verformungszone aufgebracht werden. Insbesondere bzw. alternativ wird jede Rolle einzeln über eine jeweils eigene Schwingungseinrichtung angeregt.

Es wird weiter eine Batteriezelle vorgeschlagen, zumindest umfassend ein Batteriezellengehäuse und darin angeordnet mindestens eine Elektrode, die durch das beschriebene Verfahren hergestellt oder wie die beschriebene Elektrode, nur dann wie beschrieben beschnitten, ausgeführt ist.

Die Batteriezelle umfasst insbesondere ein, ein Volumen umschließendes Batteriezellengehäuse und in dem Volumen angeordnet mindestens eine erste Elektrodenfolie einer ersten Elektrodenart, eine zweite Elektrodenfolie einer zweiten Elektrodenart und ein dazwischen angeordnetes Separatormaterial, sowie einen Elektrolyt.

Die Batteriezelle ist insbesondere eine Pouchzelle (mit einem verformbaren Batteriezellengehäuse bestehend aus einer Pouchfolie) oder eine prismatische Zelle (mit einem formfesten Batteriezellengehäuse). Eine Pouchfolie ist ein bekanntes verformbares Gehäuseteil, dass als Batteriezellengehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-Ionen-Batteriezelle.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Insbesondere ist zumindest ein System zur Datenverarbeitung vorgesehen, das Mittel aufweist, die zur Durchführung des Verfahrens bzw. zur Steuerung der Vorrichtung geeignet ausgestattet, konfiguriert oder programmiert sind bzw. die das Verfahren ausführen.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen, z. B. dem zum Fördern der Elektrode erforderlichen Antrieb, den angetriebenen Rollen/Walzen, der Schwingungseinrichtung, etc., ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind insbesondere auf die Vorrichtung, die Batteriezelle, das Kraftfahrzeug, das System zur Datenverarbeitung und/oder das computerimplementierte Verfahren (also das Computerprogramm und das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine bekannte Vorrichtung in einer Ansicht entlang der Förderrichtung;
- Fig. 2:: die Vorrichtung nach Fig. 1 in einer Ansicht entlang der Querrichtung;
- Fig. 3:: die Elektrode in einer Draufsicht entlang der radialen Richtung; mit den in der Elektrode vorliegenden Spannungen vor der Kalandrierung;
- Fig. 4:: die Elektrode in einer Draufsicht entlang der radialen Richtung; mit den in der Elektrode vorliegenden Spannungen während der Kalandrierung;
- Fig. 5:: die Elektrode in einer Draufsicht entlang der radialen Richtung nach der Kalandrierung und eine angedeutete Batteriezelle 2 in einer perspektivischen Ansicht;
- Fig. 6:: eine erste Ausführungsvariante einer Vorrichtung in einer Ansicht entlang der Querrichtung;
- Fig. 7:: die Vorrichtung nach Fig. 6 in einer Ansicht entlang der Förderrichtung;
- Fig. 8:: eine zweite Ausführungsvariante einer Vorrichtung in einer Ansicht entlang der Querrichtung; und
- Fig. 9:: die Vorrichtung nach Fig. 8 in einer Ansicht entlang der Förderrichtung.

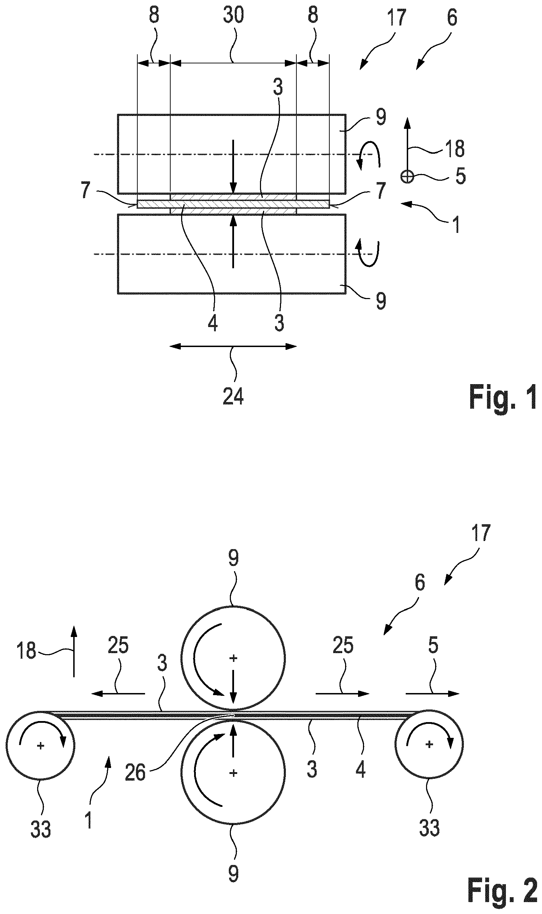

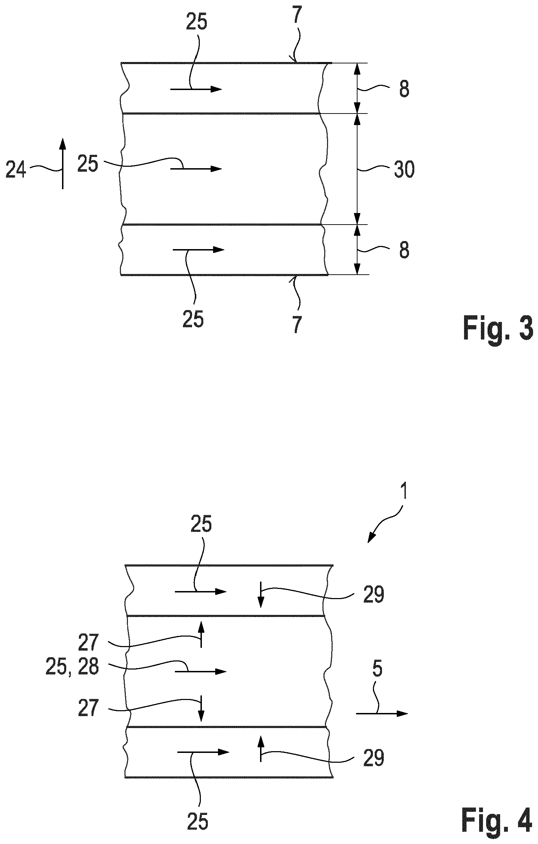

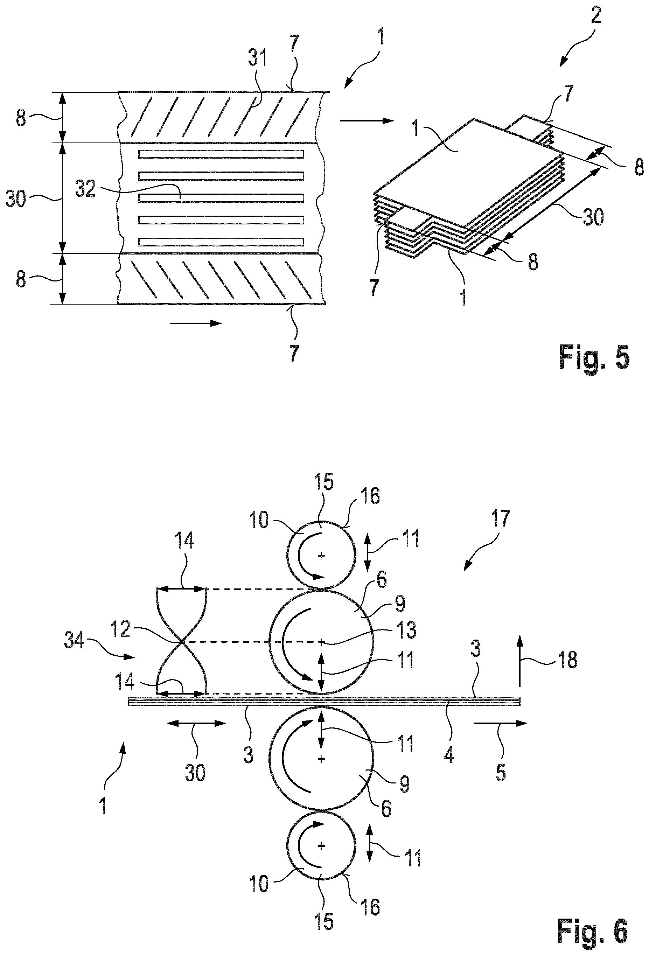

Fig. 1 zeigt eine bekannte Vorrichtung 17 in einer Ansicht entlang der Förderrichtung 5. Fig. 2 zeigt die Vorrichtung 17 nach Fig. 1 in einer Ansicht entlang der Querrichtung 24. Fig. 3 zeigt die Elektrode 1 in einer Draufsicht entlang der radialen Richtung 18; mit den in der Elektrode 1 vorliegenden Spannungen 25 vor der Kalandrierung. Fig. 4 zeigt die Elektrode 1 in einer Draufsicht entlang der radialen Richtung 18; mit den in der Elektrode 1 vorliegenden Spannungen 25, 26, 27, 28, 29 während der Kalandrierung. Fig. 5 zeigt die Elektrode 1 in einer Draufsicht entlang der radialen Richtung 18 nach der Kalandrierung. Die Fig. 1 bis 5 werden im Folgenden gemeinsam beschrieben.

Bei der Herstellung einer Lithium-Ionen-Batteriezelle 2 (angedeutet in Fig. 5) wird ein bandförmiges Trägermaterial 4 zumindest teilweise mit einem Aktivmaterial 3 beschichtet. Die so erzeugte Beschichtung aus Aktivmaterial 3 ist porös. Die Porosität wird durch das Kalandrieren reduziert, da hier die Beschichtung verdichtet wird. Das Aktivmaterial 3 wird in einer Verformungszone mit einer Kalandrierkraft beaufschlagt und komprimiert. Ein Kalander 6 umfasst zwei Walzen 9, die einen Spalt bilden, durch den hindurch die Elektrode 1 entlang einer Förderrichtung 5 gefördert wird. Dabei wird der beschichtete zweite Bereich 30 der Elektrode 1 durch die Walzen 9 kontaktiert und verdichtet. Der am Rand 7 der Elektrode 1 ausgebildete unbeschichtete ersten Bereich 8 der Elektrode 1 wird nicht kontaktiert.

Der Spannungszustand während des Kalandrierens erzeugt Falten 31 im unbeschichteten ersten Bereich 8 des Trägermaterials 4 und eine Welligkeit 32 im beschichteten zweiten Bereich 30 des Trägermaterials 4. Der Grund für diese beiden Phänomene kann durch den Spannungs- und Dehnungszustand erklärt werden. Eine erste Spannung 25 (Zugspannung) in der Elektrode 1 ist parallel zur Förderrichtung 5 orientiert und wird durch eine Fördereinrichtung 33 eingestellt.

Eine zweite Spannung 26 (Druckspannung) ist in einer quer zur Förderrichtung 5 gerichteten radialen Richtung 18 (senkrecht zum Trägermaterial 4 und zur Beschichtung) orientiert und wird durch die Anpresskraft der Walzen 9 erzeugt.

Eine dritte Spannung 27 (Zugspannung) ist in der Querrichtung 24 orientiert und resultiert aus der Dehnung des Aktivmaterials 3. Sie wird nur auf das Trägermaterial 4 im beschichteten zweiten Bereich 30 ausgeübt.

Eine vierte Spannung 28 (Zugspannung) ist in der Förderrichtung 5 orientiert und resultiert aus der Dehnung des Aktivmaterials 3 in der Förderrichtung 5. Sie wird nur auf das Trägermaterial 4 im beschichteten zweiten Bereich 30 ausgeübt.

Eine fünfte Spannung 29 (Druckspannung) ist in Querrichtung 24 orientiert und wirkt nur auf das Trägermaterial 4 im unbeschichteten ersten Bereich 8.

Das Fehlen der vierten Spannung 28 (Zugspannung in Förderrichtung 5) im unbeschichteten ersten Bereich 8 führt zu der Bildung von Falten 31. Die fünfte Spannung 29 (Druckspannung in Querrichtung 24) im ersten Bereich 8 führt ebenfalls zu der Bildung von Falten 31. Die dritte Spannung 27 dehnt das Trägermaterial 4 im zweiten Bereich 30 in der Querrichtung 24. Nach dem Kalandrieren werden elastische Spannungen, also die dritte Spannung 27, abgebaut. Dies führt zu einer Welligkeit 32 des Aktivmaterials 3 im zweiten Bereich 30.

Die kombinierte Wirkung der vierten Spannung 28 und der fünften Spannung 29 bewirkt, dass in einem Winkel zur Förderrichtung 5 verlaufende Falten 31 im ersten Bereich 8 auftreten.

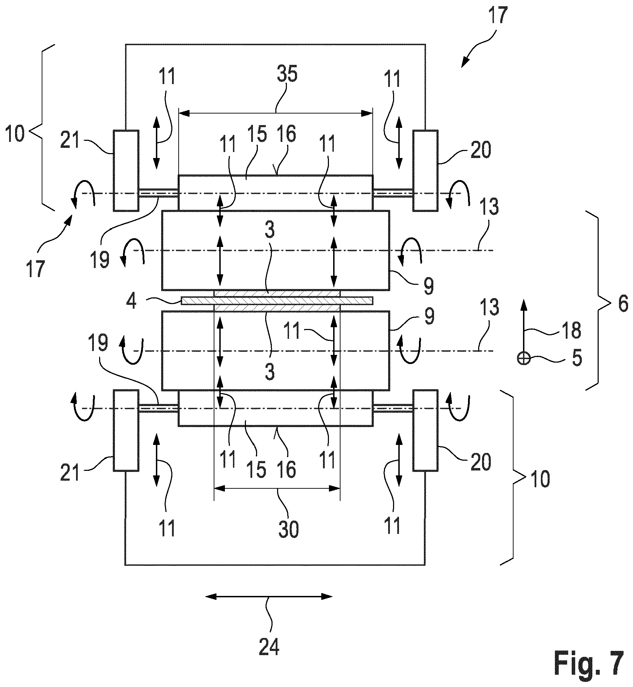

Fig. 6 zeigt eine erste Ausführungsvariante einer Vorrichtung 17 in einer Ansicht entlang der Querrichtung 24. Fig. 7 zeigt die Vorrichtung 17 nach Fig. 6 in einer Ansicht entlang der Förderrichtung 5. Die Fig. 6 und 7 werden im Folgenden gemeinsam beschrieben. Auf die Ausführungen zu den Figuren 1 bis 5 wird verwiesen.

Die Vorrichtung 17 ist zur Verdichtung des Aktivmaterials 3 geeignet ausgeführt. Die Vorrichtung 17 umfasst einen Kalander 6 und eine Schwingungseinrichtung 10.

Das Trägermaterial 4 der Elektrode 1 wird dem Kalander 6 als Endlosmaterial zugeführt. Dabei ist ein mit dem Aktivmaterial 3 beschichteter zweiter Bereich 30 der Elektrode 1 kontinuierlich, also entlang der Förderrichtung 5 ohne Unterbrechungen, ausgeführt. Es erstreckt sich auf jeder Seite des einen zweiten Bereichs 30 jeweils ein erster Bereich 8 hin zum Rand 7 der Elektrode 1. Die Elektrode 1 ist auf beiden Seitenflächen identisch ausgeführt bzw. beschichtet.

Gemäß Schritt a) erfolgt ein Bereitstellen einer Elektrode 1, die ein zumindest teilweise mit einem Aktivmaterial 3 beschichtetes Trägermaterials 4 umfasst. Gemäß Schritt b) erfolgt ein Fördern der Elektrode 1 entlang einer Förderrichtung 5 und ein Verdichten des Aktivmaterial 3 durch den Kalander 6. Der beschichtete zweite Bereich 30 der Elektrode 1 wird durch die Walzen 9 des Kalanders 6 kontaktiert und verdichtet. Der unbeschichtete erste Bereich 8 der Elektrode 1 wird nicht kontaktiert. Der Kalander 6 umfasst zwei Walzen 9, die über jeweils eine Schwingungseinrichtung 10 zu Schwingungen 11 angeregt werden.

Ein Schwingungsknoten 12 (ein sogenannter "node") der Schwingungen 11 liegt auf einer Drehachse 13 der Walzen 9, so dass eine Schwingungsamplitude 14 der Schwingungen 11 im Bereich der Drehachse 13 minimal ist. Eine Schwingungsamplitude 14 ist in einem Kontaktbereich zwischen Walze 9 und Aktivmaterial 3 der Elektrode 1 maximal. In diesem Kontaktbereich ist also der Schwingungsbauch 34 (ein sogenannter "antinode") der Schwingungen 11 angeordnet. Die Walzenoberfläche führt infolge der Anregung Schwingungen 11 aus, durch die die Walzenoberfläche im Wesentlichen entlang der radialen Richtung 18 hin zur Elektrode 1 und weg von der Elektrode 1 bewegt wird.

Die Schwingungseinrichtung 10 umfasst eine Rolle 15, die über eine Umfangsfläche 16 die Walze 9 kontaktiert und zu Schwingungen 11 anregt. Die Rolle 15 weist eine Welle 19 mit einem ersten Ende 20 und einem zweiten Ende 21 auf, wobei zwischen den Enden 20, 21 die Umfangfläche 16 angeordnet ist. Die Rolle 15 wird über jedes Ende 20, 21 zu Schwingungen 11 angeregt.

Die Rolle 15 verhindert einen punktuellen Kontakt zwischen Schwingungseinrichtung 10 und Walzenoberfläche, so dass die Schwingungen 11 gleichmäßig auf die Walzenoberfläche und gleichmäßig über die in der Querrichtung 24 verlaufende Breite der Elektrode 1 verteilt auf das Aktivmaterial 3 übertragen werden.

Die Schwingungen 11 haben eine solche Wellenlänge, dass die Walzenoberfläche, die mit der Elektrode 1 in Kontakt ist, einen Schwingungsbauch 34 hat. Das bedeutet, dass die maximale Schwingungsamplitude 14 auf die Kalandrierzone übertragen wird. Dies erhöht den Slip-Stick-Effekt und reduziert somit die Reibung.

Die Rolle 15 weist eine sich entlang der Querrichtung 24 (parallel zur Drehachse 13 der Walze 9) erstreckende Breite 35 auf, die im Wesentlichen oder zumindest der Breite der Elektrode 1 bzw. des zweiten Bereichs 30 entspricht. Auf diese Weise führt die Walzenoberfläche, die mit der Elektrodenoberfläche in Kontakt ist, die Schwingungen 11 auf. Der Rest der Walzenoberfläche führt die Schwingungen 11 nicht oder nur reduziert aus. Hin zu den, seitlich der Elektrode 1 angeordneten Lagerungen der Walze 9 werden die Schwingungen 11 zunehmend gedämpft.

Die Walzen 9 sind jeweils entlang einer, quer zu einer Förderrichtung 5 der Elektrode 1 durch den Kalander 6 verlaufenden, radialen Richtung 18 zwischen der Elektrode 1 und der Rolle 15 angeordnet.

Bei dieser ersten Ausgestaltung der Vorrichtung 17 bzw. des Verfahrens werden die Schwingungen 11 von einer vibrierenden Rolle 15 auf die (Kalander-)Walze 9 bzw. Walzen 9 übertragen.

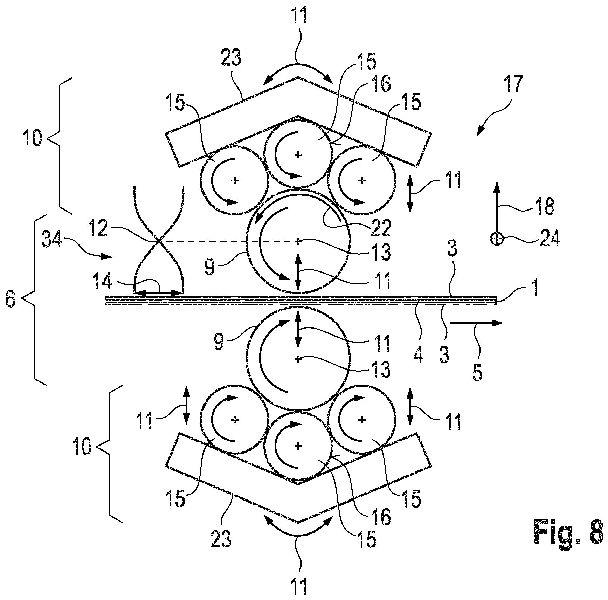

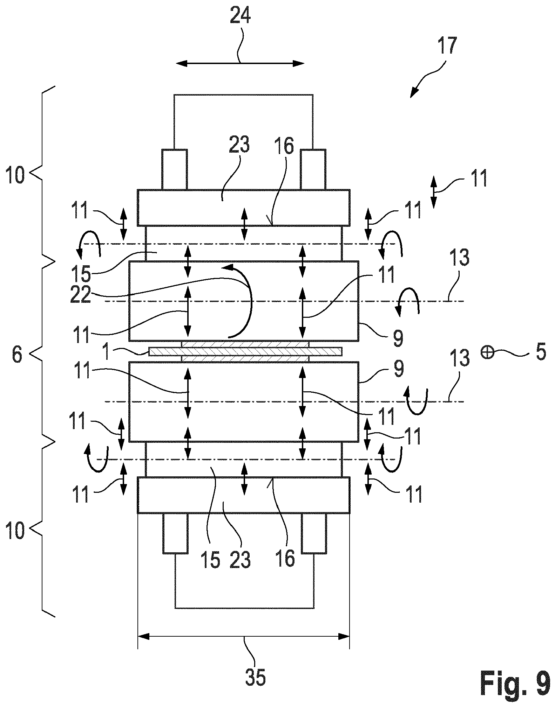

Fig. 8 zeigt eine zweite Ausführungsvariante einer Vorrichtung 17 in einer Ansicht entlang der Querrichtung 24. Fig. 9 zeigt die Vorrichtung 17 nach Fig. 8 in einer Ansicht entlang der Förderrichtung 5. Die Fig. 8 und 9 werden im Folgenden gemeinsam beschrieben. Auf die Ausführungen zu Fig. 6 und 7 wird verwiesen.

Bei dieser zweiten Ausgestaltung sind mehrere Rollen 15 vorgesehen, die über ein (einteilig ausgeführtes) Übertragungselement 23 gemeinsam angeregt werden. Das Übertragungselement 23 wird mit Schwingungen 11 beaufschlagt. Die Walzen 9 weisen jeweils eine Drehachse 13 auf und entlang einer Umfangsrichtung 22 um die Drehachse 13 sind je Walze 9 drei Rollen 15 angeordnet, die die jeweilige Walze 9 über die jeweilige Umfangsfläche 16 kontaktieren.

Die drei Rollen 15 können sich frei drehen. Diese Rollen 15 übertragen die vom Übertragungselement 23 auf die Rollen 15 applizierte Vibration auf die jeweilige (Kalander-)Walze 9. Auf diese Weise wird die Vibration bzw. werden die Schwingungen 11 über eine größere Fläche auf die (Kalander-)Walze 9 übertragen. Das Spiel und der Druck zwischen den Rollen 15 und der Walze 9 kann gezielt verändert werden. Dadurch können die Schwingungen 11 auf die Walze 9 mehr auf der Ausgangsseite der Kalanderverformungszone (also in Fig. 8 auf der rechten Seite der Walzen 9) als auf der Eingangsseite der Verformungszone (in Fig. 8 auf der linken Seite der Walzen 9) aufgebracht werden.

### Bezugszeichenliste

- 1: Elektrode
- 2: Batteriezelle
- 3: Aktivmaterial
- 4: Trägermaterial
- 5: Förderrichtung
- 6: Kalander
- 7: Rand
- 8: erster Bereich
- 9: Walze
- 10: Schwingungseinrichtung
- 11: Schwingung
- 12: Schwingungsknoten
- 13: Drehachse
- 14: Schwingungsamplitude
- 15: Rolle
- 16: Umfangsfläche
- 17: Vorrichtung
- 18: radiale Richtung
- 19: Welle
- 20: erstes Ende
- 21: zweites Ende
- 22: Umfangsrichtung
- 23: Übertragungselement
- 24: Querrichtung
- 25: erste Spannung
- 26: zweite Spannung
- 27: dritte Spannung
- 28: vierte Spannung
- 29: fünfte Spannung
- 30: zweiter Bereich
- 31: Falte
- 32: Welligkeit
- 33: Fördereinrichtung
- 34: Schwingungsbauch
- 35: Breite

## Patentansprüche

1. Verfahren zur Herstellung einer Elektrode (1) einer Batteriezelle (2); wobei das Verfahren zumindest die folgenden Schritte aufweist:
a) Bereitstellen einer Elektrode (1), die ein zumindest teilweise mit einem Aktivmaterial (3) beschichtetes Trägermaterial (4) umfasst;
b) Fördern der Elektrode (1) entlang einer Förderrichtung (5) und Verdichten des Aktivmaterials (3) durch mindestens einen Kalander (6);
wobei die Elektrode (1) an einem parallel zur Förderrichtung (5) verlaufenden Rand (7) einen unbeschichteten ersten Bereich (8) aufweist; wobei zumindest eine Walze (9) des Kalanders (6) über eine Schwingungseinrichtung (10) zu Schwingungen (11) angeregt wird.

2. Verfahren nach Patentanspruch 1, wobei der Kalander (6) mehrere Walzen (9) umfasst, wobei mindestens zwei der Walzen (9) über jeweils mindestens eine Schwingungseinrichtung (10) angeregt werden.

3. Verfahren nach einem der vorhergehenden Patentansprüche, wobei die mindestens eine Schwingungseinrichtung (10) die mindestens eine Walze (9) mit einer Frequenz zwischen 5 kHz und 30 kHz anregt.

4. Verfahren nach einem der vorhergehenden Patentansprüche, wobei die mindestens eine Schwingungseinrichtung (10) die mindestens eine Walze (9) mit einer Amplitude von zwischen 5 µm und 30 µm anregt.

5. Verfahren nach einem der vorhergehenden Patentansprüche, wobei ein Schwingungsknoten (12) der Schwingungen (11) auf einer Drehachse (13) der Walze (9) liegt, so dass eine Schwingungsamplitude (14) der Schwingungen (11) im Bereich der Drehachse (13) minimal ist.

6. Verfahren nach einem der vorhergehenden Patentansprüche, wobei die Schwingungseinrichtung (10) eine Rolle (15) umfasst, die über eine Umfangsfläche (16) die mindestens eine Walze (9) kontaktiert und zu Schwingungen (11) anregt.

7. Vorrichtung (17) zur Herstellung einer Elektrode (1) einer Batteriezelle (2), wobei die Elektrode (1) ein zumindest teilweise mit einem Aktivmaterial (3) beschichtetes Trägermaterials (4) umfasst und die Vorrichtung (17) zur Verdichtung des Aktivmaterials (3) geeignet ausgeführt ist; wobei die Vorrichtung (17) zumindest einen Kalander (6) und eine Schwingungseinrichtung (10) umfasst; wobei die Elektrode (1) entlang einer Förderrichtung (5) durch den mindestens einen Kalander (6) förderbar ist und wobei die Elektrode (1) an einem parallel zur Förderrichtung (5) verlaufenden Rand (7) einen unbeschichteten ersten Bereich (8) aufweist; wobei zumindest eine Walze (9) des Kalanders (6) über die Schwingungseinrichtung (10) zu Schwingungen (11) anregbar ist.

8. Vorrichtung (17) nach Patentanspruch 7, wobei die Schwingungseinrichtung (10) eine Rolle (15) umfasst, die über eine Umfangsfläche (16) die mindestens eine Walze (9) kontaktiert und zu Schwingungen (11) anregt.

9. Vorrichtung (17) nach Patentanspruch 8, wobei die Walze (9) entlang einer, quer zu einer Förderrichtung (5) der Elektrode (1) durch den Kalander (6) verlaufenden, radialen Richtung (18) zwischen der Elektrode (1) und der Rolle (15) angeordnet ist.

10. Vorrichtung (17) nach einem der vorhergehenden Patentansprüche 8 und 9, wobei die Rolle (15) eine Welle (19) mit einem ersten Ende (20) und einem zweiten Ende (21) aufweist, wobei zwischen den Enden (20, 21) die Umfangfläche (16) angeordnet ist, wobei die Rolle (15) über jedes Ende (20, 21) zu Schwingungen (11) anregbar ist.

11. Vorrichtung (17) nach einem der vorhergehenden Patentansprüche 8 bis 10, wobei die Walze (9) eine Drehachse (13) aufweist und entlang einer Umfangsrichtung (22) um die Drehachse (13) eine Mehrzahl von Rollen (15) angeordnet sind, die die Walze (9) über die jeweilige Umfangsfläche (16) kontaktieren.

12. Vorrichtung (17) nach Patentanspruch 11, wobei zumindest zwei Rollen (15) der Mehrzahl von Rollen (15) über ein Übertragungselement (23) gemeinsam angeregt werden, dass die Umfangsflächen (16) der mindestens zwei Rollen (15) kontaktiert, wobei das Übertragungselement (23) durch die Schwingungseinrichtung (10) zu Schwingungen (11) anregbar ist.
